(19) Europäisches Patentamt
European Patent Office
Office européen des brevets

(11) Publication number: 0 036 278
B1

(12) **EUROPEAN PATENT SPECIFICATION**

(45) Date of publication of patent specification: 19.06.85

(51) Int. Cl.$^4$: C 08 L 71/04, C 08 L 51/08, C 08 L 53/02

(21) Application number: 81300960.2

(22) Date of filing: 06.03.81

(54) **Polyphenylene ether resin composition of improved heat stability and shaped articles thereof.**

(30) Priority: 10.03.80 JP 30051/80
22.04.80 JP 53273/80
09.06.80 JP 77385/80

(43) Date of publication of application:
23.09.81 Bulletin 81/38

(45) Publication of the grant of the patent:
19.06.85 Bulletin 85/25

(84) Designated Contracting States:
DE FR GB NL

(56) References cited:
FR-A-1 577 890
FR-A-2 027 757
GB-A-2 002 775
US-A-3 700 750
US-A-4 075 163

The file contains technical information submitted after the application was filed and not included in this specification

(73) Proprietor: MITSUBISHI GAS CHEMICAL COMPANY, INC.
5-2, Marunouchi 2-chome Chiyoda-Ku
Tokyo (JP)

(72) Inventor: Sugio, Akitoshi
382-155, Oaza Sashiohgiryo Bessho
Ohmiya-shi Saitama-ken (JP)
Inventor: Masu, Masanobu
11-18, Kanamachi 5-chome Katsushika-ku
Tokyo (JP)
Inventor: Okabe, Masao
717-72, Tsukushino
Abiko-shi Chiba-ken (JP)
Inventor: Sasaki, Yukio
4-11, Niijuku 6-chome Katsushika-ku
Tokyo (JP)
Inventor: Ishiyama, Kozo
41-9, Hayamiya 3-chome Nerima-ku
Tokyo (JP)

(74) Representative: Myerscough, Philip Boyd et al
J.A.Kemp & Co. 14, South Square Gray's Inn
London, WC1R 5EU (GB)

EP 0 036 278 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a polyphenylene ether resin composition having improved heat stability.

Polyphenylene ethers are known resins which are disclosed, for example, in US—A—3306874, 3306875, 3257357, 3257358 and 4011200 and JP—A—126800/1975. Since polyphenylene ethers having a molecular weight above a certain limit have a high softening point, they are useful in applications which require heat stability. In formulating a polyphenylene ether into resin compositions, however, its high softening point makes it necessary to use higher kneading and extruding temperatures than in the case of other versatile resins, and high temperatures are also required in molding the resin compositions. Moreover, molded articles of the polyphenylene ether resin compositions are frequently used at relatively high temperatures over long periods of time in contrast to those from versatile resins.

Because polyphenylene ethers are relatively unstable to heat as is well known, they undergo degradation during extrusion and molding at high temperatures, and result in polyphenylene ether resin compositions and molded articles having degraded properties and/or discoloration. These deleterious effects limit widespread utilization of polyphenylene ether resin compositions, and it has been desired to remedy these defects, particularly to improve their heat stability at high temperatures.

Various methods have already been proposed for the stabilization of resin compositions containing polyphenylene ethers. These methods are classified into a group involving capping the hydroxyl groups present at the terminals of the polyphenylene ether molecule by acylation, etc., and a group comprising adding various stabilizers to polyphenylene ethers.

Known stabilizers used in the latter group include, for example, benzoates (US—A—3,379,875), hexaalkylphosphoric triamides or combinations thereof with other compounds (US—A—3414536, 3420792, 3429850, 3465062, 3472814, 3483271, 3792121 and 3816562), octa-alkylpyrophosphoramides or combinations thereof with other compounds (US—A—3,450,670), amines (US—A—3,563,934 and 3,956,423), phosphites or hydrazines (US—A—3,639,334), alkanolamines (US—A—3,761,541), arylphosphonic amides (US—A—3,792,120), sterically hindered phenols having a triazine or isocyanuric ring (US—A—4,154,719), substituted dicarboxylic acid dihydrazides (US—A—3,954,904), high-molecular-weight phosphites or combinations thereof with other compounds (US—A—3,952,072), amides (JP—B—29748/1969), metal dithiocarbamates (JP—B—19395/1970 and 8352/1970), carboxylic acid anhydrides (JP—B—29,750/1969), phosphites (JP—B—29,751/1969, FR—A—1577890 and US—A—3700750), phosphonites or thiophosphonites (GB—A—2002775), benzene phosphonous acid compounds (US—A—4075163), sterically hindered phenols or combinations thereof with other compounds (JP—B—43473/1971, 42029/1971, 42030/1971, 42031/1971, 42032/1971, and 42033/1971), sterically hindered phenols having one amide linkage in the molecule (JP—B—24782/1971), sterically hindered phenols having one ester linkage in the molecule (JP—B—38623/1973), high-molecular-weight phosphites (JP—A—23846/1974, 31755/1974 and 40476/1975), and combinations of phosphorous acid amides and boron compounds (JP—A—129750/1974).

None of these numerous stabilizers previously proposed have been conducive to the provision of polyphenylene ether resin compositions having fully satisfactory heat stability, particularly at high temperatures, in practical applications.

This invention seeks to improve the heat stability of a polyphenylene ether resin composition and to provide a polyphenylene ether resin composition having excellent heat stability at high temperatures.

In particular, the invention seeks to provide a polyphenylene ether resin composition showing inhibited degradation against a long heat history at high temperatures, which can withstand high temperatures during kneading, extrusion and molding and give molded articles having excellent heat stability in long-term use at high temperatures.

The present invention provides a polyphenylene ether resin composition having improved heat stability, said composition comprising a matrix of a polyphenylene ether resin and dispersed therein, as heat stabilizer, a phosphorus oxyacid compound, characterised in that there is used as stabilizer a phosphorus oxyacid compound selected from a phosphonous acid of the formula

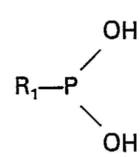

(I)

wherein $R_1$ represents an alkyl group, an aryl group which may be substituted by an alkyl group or an aralkyl group which may be substituted by an alkyl group, and a diphosphonite of the formula

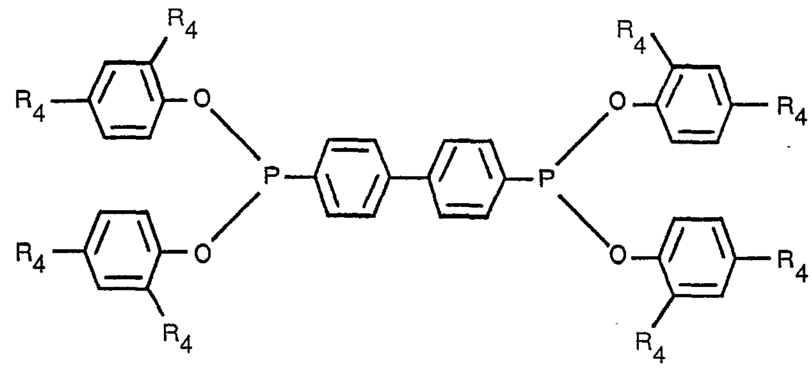

(II)

wherein $R_4$ represents identical or different alkyl groups in an amount of 0.01 to 10 parts by weight per 100 parts by weight of the matrix.

Preferred compositions of the invention also comprise at least one sterically hindered phenol dispersed in the polyphenylene ether resin matrix, and these compositions more preferably also comprise at least one organic phosphite compound selected from organic monophosphites and organic polyphosphites dispersed in the matrix.

The polyphenylene ether resin forming the resin matrix in the composition of this invention can be a polyphenylene ether homopolymer or copolymer obtained by polycondensing at least one mononuclear phenol of the formula

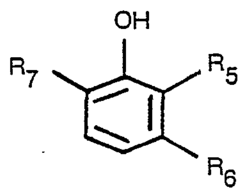

(III)

wherein $R_5$, $R_6$ and $R_7$, independently represent a hydrogen atom or an alkyl group having 1 to 3 carbon atoms, provided that at least one of $R_5$ and $R_7$ is an alkyl group having 1 to 3 carbon atoms, or a grafted polyphenylene ether obtained by graft-polymerizing such a polyphenylene ether with a vinyl aromatic compound.

Methods for producing these polyphenylene ethers are well known *per se*.

Examples of the mononuclear phenols of general formula (III) include 2,6-dimethylphenol, 2,6-diethylphenol, 2,6-dipropylphenol, 2-methyl-6-ethylphenol, 2-methyl-6-propylphenol, 2-ethyl-6-propylphenol, m-cresol, 2,3-dimethylphenol, 2,3-diethylphenol, 2,3-dipropylphenol, 2-methyl-3-ethylphenol, 2-methyl-3-propylphenol, 2-ethyl-3-methylphenol, 2-ethyl-3-propylphenol, 2-propyl-3-methylphenol, 2-propyl-3-ethylphenol, 2,3,6-trimethylphenol, 2,3,6-triethylphenol, 2,3,6-tripropylphenol, 2,6-dimethyl-3-ethylphenol, and 2,6-dimethyl-3-propylphenol.

Polyphenylene ethers derived from these mononuclear phenols, therefore, include homopolymers such as poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, and poly(2-ethyl-6-propyl-1,4-phenylene)ether; and copolymers such as 2,6-dimethylphenol/2,3,6-trimethylphenol copolymer (which denotes a polyphenylene ether copolymer derived from 2,6-dimethylphenol and 2,3,6-trimethylphenol, and in the following description, polyphenylene ether copolymers are represented in the same manner), a 2,6-dimethylphenol/2,3,6-triethylphenol copolymer, a 2,6-diethylphenol/2,3,6-trimethylphenol copolymer and a 2,6-dipropylphenol/2,3,6-trimethylphenol copolymer.

The grafted polyphenylene ethers used equally to these homopolymers and copolymers in this invention are obtained by grafting vinyl aromatic compounds such as styrene, alpha-methylstyrene, vinyltoluene and vinylxylene to these homopolymers or copolymers, and include, for example, styrene-grafted poly(2,6-dimethyl-1,4-phenylene)ether, and a styrene-grafted 2,6-dimethylphenol/2,3,6-trimethylphenol copolymer.

Preferably, such grafted polymers having a grafting ratio of 10 to 50%, especially 20% to 40%.

Among these polyphenylene ethers, poly(2,6-dimethyl-1,4-phenylene)ether, a 2,6-dimethylphenol/2,3,6-trimethylphenol copolymer, and grafted polyphenylene ethers obtained by grafting styrene to such polymers are especially preferred for use in this invention.

The resin matrix in the composition of this invention may be composed of such a polyphenylene ether alone, or a mixture of it with another polymer. The other polymer may be a thermoplastic resin or an elastomer.

The thermoplastic resin as referred to herein is a resin containing at least 25% by weight of a recurring structural unit of the formula IV

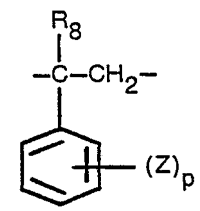

(IV)

wherein $R_8$ represents a hydrogen atom or a methyl or ethyl group, Z represents a halogen atom or a methyl or ethyl alkyl group, and p is 0 or a positive integer of 1 to 3, in the polymer chain.

Examples of the halogen atom for Z are chlorine and bromine.

Examples of such a thermoplastic resin are polystyrene, a rubber-modified polystyrene (a high-impact polystyrene), a styrene/butadiene copolymer, a styrene/butadiene/acrylonitrile copolymer, a styrene/acrylic rubber/acrylonitrile copolymer, a styrene/alpha-methylstyrene copolymer, and a styrene/butadiene block copolymer.

At least one such thermoplastic resin can be used in combination with the polyphenylene ether.

The thermoplastic resin may be included in the resin matrix in an amount of preferably not more than 95%, especially preferably not more than 80%.

The elastomer which may be used in this invention is an elastomer in the ordinary sense. Accordingly, the elastomer in this invention, for example, includes polymers having a Young's modulus at ordinary temperature of $10^5$ to $10^9$ dynes/$cm^2$ (0.1 to 1020 kg/$cm^2$), the Young's modulus being defined at pages 71 to 78 of A. V. Tobolsky, "Properties and Structures of Polymers" (John Wiley & Sons, Inc., 1960).

Examples of such an elastomer include polybutadiene, polyisoprene, a nitrile rubber, an ethylene/propylene copolymer, an ethylene/propylene/diene copolymer (EPDM), polypentenamer, Thiokol rubbers, polysulfide rubbers, an acrylic rubber, a polyurethane rubber, a grafted product formed between a butyl rubber and polyethylene, polyester elastomers, and block copolymers, such as A—B—A' type block copolymers and A—B'—A' type block copolymers of diene compounds and vinyl aromatic compounds.

In the above A—B—A' type block copolymers and A—B'—A' type block copolymers, the terminal blocks A and A' are polymer chain blocks of the vinyl aromatic compounds. The central block B in the A—B—A' type block copolymers is a polymer chain block of a conjugated diene, and the central block B' in the A—B'—A' type block copolymers is a block resulting from the hydrogenation of a polymer chain block of a conjugated diene.

In the above description, the diene, diene compound and conjugated diene are used in the same sense, and may, for example, specifically represent 1,3-butadiene, 2,3-dimethylbutadiene, isoprene, 1,3-pentadiene or a mixture of these. The vinyl aromatic compound may, for example, denote styrene, alpha-methylstyrene, vinyltoluene, vinylxylene, ethylvinylxylene, vinylnaphthalene, or mixtures thereof.

Preferably, the aforesaid A—B—A' type block copolymers or A—B'—A' type block copolymers are used as the elastomer in this invention. The terminal blocks A and A' of these block copolymers preferably have a number average molecular weight of 2,000 to 100,000, and the central blocks B and B' preferably have a number average molecular weight of 25,000 to 1,000,000.

The elastomer may be included in the resin composition of this invention in an amount of preferably not more than 20% by weight, especially preferably not more than 10% by weight, based on the resin matrix.

In the polyphenylene ether resin composition of this invention, the polyphenylene ether may be included in an amount of at least 5% by weight, preferably at least 15% by weight, based on the resin matrix.

In the definition of formula (I), the alkyl group is preferably an alkyl group having 1 to 10 carbon atoms such as methyl, ethyl, propyl, butyl, pentyl, hexyl, amyl, octyl and decyl. Examples of the aryl or aralkyl group which may be substituted by an alkyl group are phenyl, naphthyl, diphenyl, benzylphenyl, benzyl, triphenylmethyl, methylphenyl, dimethylphenyl, trimethylphenyl and ethylphenyl.

The phosphonous acids (monophosphonous acids) corresponding to general formula (I) include, for example, the compounds described at page 5 of Gennady M. Kosolapoff, "Organophosphorus Compounds" (John Wiley & Sons, Inc., 1950). Specific examples of the phosphonous acids are ethylphosphonous acid, propylphosphonous acid, isopropylphosphonous acid, isobutylphosphonous acid, isoamylphosphonous acid, n-octylphosphonous acid, benzylphosphonous acid, triphenylmethylphosphonous acid, phenylphosphonous acid, 3-methylphenylphosphonous acid, 2-methylphenylphosphonous acid, 4-methylphenylphosphonous acid, 4-ethylphenylphosphonous acid, 2,4-dimethylphenylphosphonous acid, 2,5-dimethylphenylphosphonous acid, 2,4,5-trimethylphenylphosphonous acid, 2,4,6-trimethylphenylphosphonous acid, 1-naphthylphosphonous acid, 2-naphthylphosphonous acid, 4-diphenylphosphonous acid and 4-benzylphenylphosphonous acid.

The diphosphonites of formula II used in this invention fall into the same category as organic phosphites previously used in that both contain a trivalent phosphorus atom but are characterised by the fact that because they have much higher hydrolysis resistance than the organic phosphites and possess high heat stability, they do not decompose at high temperatures and they scarcely dissipate by volatilization during molding.

Examples of diphosphonites of formula II include tetrakis(2,4 - di - tert. - butylphenyl) - 4,4' - biphenylene phosphonite, tetrakis(2,4 - dimethylphenyl) - 4,4' - biphenylene diphosphonite, tetrakis(2,4 - diethylphenyl) - 4,4' - biphenylene diphosphonite, tetrakis(2,4 - di - n - propylphenyl) - 4,4' - biphenylene diphosphonite and tetrakis(2,4 - di - iso-propylphenyl) - 4,4' - biphenylene diphosphonite. These diphosphonites can be prepared, for example, by reacting 4,4' - biphenylenediphosphonous acid with the corresponding aromatic hydroxy compounds.

The phosphonous acids of the formula (I) are included in an amount of 0.01 to 10 parts by weight, preferably 0.05 to 5 parts by weight, especially preferably 0.1 to 3 parts by weight, per 100 parts by weight of the resin matrix. The upper limit of this amount for the disphosphonites, however, may be reduced to about one-half of the above-specified value in order to obtain the same effect as the phosphonous acids of formula (I). Accordingly, the diphosphonites may be added in an amount of 0.01 to 5 parts by weight, preferably 0.05 to 3 parts by weight, especially preferably 0.1 to 1 part by weight, per 100 parts by weight of the resin matrix in the resin composition of this invention.

Even when these compounds are used in amounts exceeding the above upper limits, the heat stability of the resulting resin composition is not correspondingly improved. Rather, it is frequently deleterious on the properties of the resin composition, resulting in lowered heat distortion temperatures, for example. If the amount of the stabilizer compound is below the specified limit, the heat stability of the resin composition is not improved to the expected extent.

The resin composition of this invention shows better heat stability by dispersing both the phosphonous acid (I) or diphosphonite (II) and at least one sterically hindered phenol in the matrix resin. It is believed that the better heat stability is due to the synergistic action of the two kinds of stabilizer compounds.

Examples of sterically hindered phenols which can be effectively useed in this inventin include monohydric phenols such as 2,6 - di - tert. - butyl - p - cresol, 2 - tert. - butyl - 4 - methoxyphenol, 2,4 - dinonylphenol, octadecyl - 3 - (3,5 - di - tert. - butyl - 4 - hydroxyphenyl)propionate, diethyl - 3,5 - di - tert. - butyl - 4 - hydroxybenzylphosphonate, and 2 - (3',5' - di - tert. - butyl - 4' - hydroxyanilino) - 4,6 - dioctylthio - 1,3,5 - triazine; dihydric phenols such as 2,2' - methylenebis(4 - methyl - 6 - tert. - butylphenyl), 2,2' - methylenebis(4 - ethyl - 6 - tert. - butylphenol), butylidenebis(methyl - butylphenol), 4,4' - thiobis(6 - tert. - butyl - 3 - methylphenol), 1,1 - bis(4 - hydroxyphenyl)cyclohexane, 1,6 - hexanediol - bis - 3 - (3,5 - di - tert. - butyl - 4 - hydroxyphenyl)propionate, 2,2' - thiodiethyl - bis(3,5 - di - tert. - butyl - 4 - hydroxyphenyl)propionate) and N,N' - hexamethylenebis(3,5 - di - tert. - butyl - 4 - hydroxyhydrocinnamide); trihydric phenols such as 1,3,5 - tris(4 - tert. - butyl - 3 - hydroxy - 2,6 - dimethylbenzyl)isocyanuric acid, 2,4,6 - tris(3',5' - di - tert. - butyl - 4' - hydroxybenzyl) - 1,3,5 - triazine, a triester of 3,5 - di - tert. - butyl - 4 - hydroxyhydrocinnamic acid with 1,3,5 - tris(2 - hydroxyethyl - S - triazine - 2,4,6 - (1H, 3H, 5H)trione) and 1,1,3 - tris(2' - methyl - 4' - hydroxy - 5' - tert. - butylphenyl)butane; and tetrahydric phenols such as pentaerythrityltetrakis[3 - (3,5 - di - tert. - butyl - 4 - hydroxyphenyl)propionate].

The sterically hindered phenol may be included in the resin composition of this invention in an amount of 0.05 to 10 parts by weight, preferably 0.1 to 5 parts by weight, especially preferably 0.5 to 3 parts by weight, per 100 parts by weight of the matrix resin.

The resin composition of this invention shows much better heat stability by dispersing an organic monophosphite or organic polyphosphite as well as the phosphonous acid (I) or diphosphonite (II) and the sterically hindered phenol in the resin matrix.

Examples of effective organic phosphites for use in this invention include organic monophosphites such as triphenyl phosphite, tricresyl phosphite, triisooctyl phosphite, tridecyl phosphite, tri-2-ethylhexyl phosphite, trioctadecyl phosphite, tri(octylphenyl)phosphite, tri(nonylphenyl)phosphite, tridodecylthio phosphite, phenyldiethyl phosphite, phenyl-di(2-ethylhexyl)phosphite, isooctyldiphenyl phosphite, diisooctylmonophenyl phosphite and di(2 - ethylhexyl)mono(isooctylphenyl)phosphite; and organic polyphosphites such as a phosphite resin of hydrogenated bisphenol A. Among these organic phosphites, the organic polyphosphites are preferred. An organic monophosphite may be used in combination with an organic polyphosphite.

The organic phosphite may be included in the resin composition of this invention in an amount of 0.05 to 10 parts by weight, preferably 0.1 to 5 parts by weight, especially preferably 0.5 to 3 parts by weight, per 100 parts by weight of the resin forming the matrix.

The resin composition of this invention may further contain various additives depending upon the intended uses. Examples of the additives include lubricants, such as olefin waxes typified by polyethylene wax and polypropylene wax; phosphate-type fire retardants typified by triphenyl phosphate or tricresyl phosphate; bromine-type fire retardants typified by decabromobiphenyl pentabromotoluene or decabromobiphenyl ether; pigments typified by titanium dioxide or zinc oxide; inorganic fillers typified by glass fibers, asbestos, wollastonite, mica or talc; and organic fillers typified by carbon fibers. The amounts of these additives vary depending upon their types, but should be within the ranges which do not degrade the heat stability of the resin composition of this invention.

The resin composition of this invention can be easily produced by melt-mixing methods known with regard to thermoplastic resins. For example, it can be prepared conveniently by a method which comprises mixing the polyphenylene ether or a mixture of it with another polymer such as a thermoplastic resin or

elastomer, with predetermined amounts of the phosphonous acid (I) or diphosphonite (II), and optionally the sterically hindered phenol and optionally the organic phosphite in a mixer, then kneading the mixture fully in a melt-extruder, and pelletizing the resulting homogeneous molten mixture.

The following Examples and Comparative Examples illustrate the resin composition of this invention more specifically. Unless otherwise specified, all parts and percentages in these examples are by weight.

Example 1 and Comparative Example 1

Sixty (60) parts of a 2,6-dimethylphenol/2,3,6-trimethylphenol copolymer (2,3,6-trimethylphenol 5 mole%) having an intrinsic viscosity, measured at 25°C using chloroform as a solvent, of 0.52 dl/g, 37 parts of high-impact polystyrene (the polystyrene matrix having an intrinsic viscosity, measured at 25°C using chloroform as a solvent, of 0.89 dl/g; gel content analyzed by using a mixture of methyl ethylketone and acetone as a solvent of 12.9% by weight), 2 parts of a polystyrene/polybutadinene/polystyrene block copolymer (the weight ratio of the polystyrene blocks to the polybutadiene block 30:70; the viscosity of a 20% toluene solution of the copolymer measured at 25°C using a Brookfield Model RVT-viscometer, 1500 cps), 1 part of an ethylene/propylene copolymer (having a reduced specific viscosity, measured at 135°C in a concentration of 0.1 g/100 ml using decalin as a solvent, of 2.0 and a glass transition point of −49°C), 5.8 parts of triphenyl phosphate, 7 parts of titanium dioxide, 0.4 part of phenylphosphonous acid [$C_6H_5P(OH)_2$] and 0.6 part of 2,2′-methylenebis(4-methyl-6-tert.-butylphenol) were fully mixed in a Henschel mixer. The resulting mixture was pelletized by a twin-screw extruder (AS-30, a product of Nakatani Kikai Seisakusho) in which the maximum temperature of the cylinder was set at 290°C. A test specimen, 3 mm ($\frac{1}{8}$ inch) thick, for measurement of Izod impact strength was molded from the resulting pellets under an injection pressure of 103 MPa (1050 kg/cm$^2$) using an injection molding machine (SJ-35B, a product of Meiki Seisakusho). The test specimen was aged in hot air at 115°C for 10 days. Its Izod impact strength was measured before and after the aging. The results are tabulated below.

For comparison, the above procedure was repeated except that the phenylphosphonous acid was not used. The Izod impact strength of the test specimen not containing the phosphonous acid was measured and the results are also tabulated below (Comparative Example 1).

| | Izod impact strength notched J/cm (kg-cm/cm) | |
|---|---|---|
| | Before aging | After aging |
| Example 1 | 12.8 (24.0) | 9.6 (17.9) (75%) |
| Comparative Example 1 | 9.6 (18.0) | 6.0 (11.3) (63%) |

In the above and subsequent tables, the parenthesized figures show the percent retention calculated as follows:

$$\text{Retention (\%)} = \frac{\text{Izod impact strength after aging}}{\text{Izod impact strength before aging}} \times 100$$

The above table clearly shows that the use of phenylphosphonous acid improved the Izod impact strength of the molded product after the aging.

Example 2 and Comparative Example 2

The pellets produced in Example 1 and Comparative Example 1 were left to stand for 60 minutes in the molten state in the cylinder of an injection molding machine in which the maximum temperature of the cylinder was set at 280°C, and thereafter injection-molded to prepare test specimens for measurement of Izod impact strength. The results are tabulated below together with the data obtained in Example 1.

| | Izod impact strength notched J/cm (kg-cm/cm) | |
|---|---|---|
| | Method of Example 1 | After 60 minute standing |
| Example 2 | 12.8 (24.0) | 7.6 (14.2) (59%) |
| Comparative Example 2 | 9.6 (18.0) | 3.3 (6.1) (35%) |

It is seen from the above table that the resin composition of this invention shows a high retention of Izod impact strength even after it has been subjected to a heat history at high temperature.

Example 3 and Comparative Example 2

The procedure of Example 2 was repeated except that 1 part of phenylphosphonous acid was used instead of 0.4 part of phenylphosphonous acid and 0.6 part of 2,2'-methylenebis-(4-methyl-6-tert.-butylphenol). The test specimen was examined for Izod impact strength in the same way as in Example 2.

For comparison, the results of Comparative Example 2 wherein the phenylphosphonous acid was not used are tabulated below together with the results of Example 3.

| | Izod impact strength notched J/cm (kg-cm/cm) | |
|---|---|---|
| | Method of Example 1 | After 60 minute standing |
| Example 3 | 11.6 (21.8) | 5.6 (10.5)(48%) |
| Comparative Example 2 | 9.6 (18.0) | 3.3 (6.1) (34%) |

It is seen from the above table that even when phenylphosphonous acid alone is used as a stabilizer, the resin composition of this invention shows a high retention of Izod impact strength after it has been subjected to a heat history.

Example 4 and Comparative Example 3

85 Parts of the same 2,6-dimethylphenol/2,3,6-trimethylphenol copolymer as used in Example 1, 15 parts of the same high-impact polystyrene as used in Example 1, 5 parts of titanium dioxide, 0.4 part of phenylphosphonous acid and 1.6 parts of pentaerythrityl-tetrakis[3-(3,5-di-tert.-butyl-4-hydroxyphenyl)propionate] were fully mixed in a Henschel mixer. The resulting mixture was pelletized by a twin-screw extruder (AS-30, used in Example 1) in which the maximum temperature of the cylinders was set at 300°C. The pellets were injection-molded under an injection pressure of 129.5 MPa (1320 kg/cm$^2$) by an injection molding machine (SJ-35B, used in Example 1) in which the maximum temperature of the cylinder was set at 320°C. to prepare a test specimen, 3 mm ($\frac{1}{8}$ inch) thick, for measurement of Izod impact strength. The test specimen was aged in hot air at 120°C for 100 hours. The Izod impact strengths of the specimen was measured before and after the aging, and the results are tabulated below.

For comparison, the above procedure was repeated except that the stabilizer compounds were not added. The results are also shown in the following table (Comparative Example 3).

| | Izod impact strength notched J/cm (kg-cm/cm) | |
|---|---|---|
| | Before aging | After aging |
| Example 4 | 4.8 (9.0) | 4.0 (7.5) (83%) |
| Comparative Example 3 | 4.7 (8.8) | 2.8 (5.3) (60%) |

Examples 5 to 8 and Comparative Example 4

(1) Sixty (60) parts of a 2,6-dimethylphenol/2,3,6-trimethylphenol copolymer (the 2,3,6-trimethylphenol content 5 mole%) having an intrinsic viscosity, measured at 25°C in chloroform, of 0.52 dl/g) and 40 parts of a high-impact polystyrene (the polystyrene matrix having an intrinsic viscosity, measured at 25°C in chloroform, of 0.80 dl/g; the gel content determined by using benzene as a solvent of 22.4%) were dissolved in 1000 parts of benzene while stirring them with an agitator. After the dissolving of the resin, about 2500 parts of methanol were added with stirring to precipitate the resin which was recovered. The recovered resin was separated by filtration, and washed with methanol. The resin was dried in the air at room temperature for 2 days, and further dried overnight at 60°C under reduced pressure.

(2) Ten parts of the resulting mixture of the 2,6-dimethylphenol/2,3,6-trimethylphenol copolymer and the high-impact polystyrene was added to a solution of 0.1 part of tetrakis(2,4-di-tert.-butylphenol)-4,4'-biphenylene diphosphonite in a suitable amount of ethanol. The mixture was slurried by agitation. It was dried in the air overnight and then further dried at 50°C under reduced pressure for 8 hours (Example 5). The above procedure was repeated except that the amount of the diphosphonite was changed to 0.3 part (Example 6), 0.5 part (Example 7) and 0.7 part (Example 8).

(3) 1.5 Parts of each of the powdery mixtures was molded into cylindrical specimens under pressure. The test specimens were set in a heater of a Koka-type flow tester (a product of Shimadzu Seisakusho) maintained at 280°C, and allowed to stand for 6 minutes under a pressure of 2.9 MPa (30 kg/cm$^2$). Six minutes later, the heater was fully cooled, and the Hunter's whitenesses of the cylindrical specimens were measured by a color difference meter (Color Studio CS—K5F, a product of Nippon Denshoku Kogyo K.K.). The Hunter's whitenesses of the specimens which were left to stand for 30 minutes and 60 minutes respectively under heat were also measured. The results are tabulated below.

For comparison, test specimens were prepared in accordance with the procedures (1) to (3) under the same conditions as above except that tetrakis(2,4-di-tert.-butylphenyl)-4,4'-biphenylene diphosphonite was not added. The results are shown in the following table (Comparative Example 5).

| Heating time (minutes) | 6 | 30 | 60 |
|---|---|---|---|
| Example 5 | 24.6 | 19.6 | 20.2 |
| Example 6 | 25.4 | 21.1 | 18.7 |
| Example 7 | 26.3 | 22.4 | 19.3 |
| Example 8 | 26.8 | 23.3 | 19.6 |
| Comparative Example 4 | 21.6 | 18.9 | 14.9 |

The results in the above table show that the diphosphonite is effective for inhibiting coloration of the polyphenylene ether resin under heat.

Example 9 and Comparative Example 5

Ten parts of the same 2,6-dimethylphenol/2,3,6-trimethylphenol copolymer as used in Example 5 and 0.1 part of the same diphosphonite as used in Example 5 were mixed in the same way as in Example 5. Subsequently, the mixture was subjected to the same operation as in Example 5, and the whitenesses of the specimens obtained were measured. The results are tabulated below.

For comparison, the above procedure was repeated except that the diphosphonite was not added. The results are also shown in the following table (Comparative Example 5).

| Heating time (minutes) | 6 | 30 | 60 |
|---|---|---|---|
| Example 9 | 17.9 | 14.4 | 15.1 |
| Comparative Example 5 | 12.4 | 11.8 | 12.4 |

The results show that the diphosphonite inhibits coloration of polyphenylene ether under heat.

Example 10 and Comparative Example 6

(1) A solution of 60 parts of the same 2,6-dimethylphenol/2,3,6-trimethylphenol copolymer as used in Example 5 in 600 parts of benzene was fully mixed with a solution of 40 parts of a polystyrene/polybutadiene/polystyrene block copolymer (the weight ratio of the polystyrene block to the polybutadiene block 30:70; a 20% toluene solution of the copolymer had a viscosity, measured at 25°C using a Brookfield Model RVT viscometer, of 1.5 Pas (1500 cps) in 400 parts of chloroform. About 2500 parts of methanol was added to the mixed solution to precipitate the resin, which was recovered. The recovered resin was filtered, washed, air-dried, and dried under reduced pressure under the same conditions as in Example 5, (1) and (2) to form a resin mixture.

The resulting mixture was subjected to the same operation as in Example 5, (3), and the whiteness of the molded product was measured. The results are tabulated below.

For comparison, the above procedure was repeated except that the diphosphonite was not added. The results are also shown in the following table (Comparative Example 6).

| Heating time (minutes) | 6 | 30 | 60 |
|---|---|---|---|
| Example 10 | 20.0 | 19.6 | 17.5 |
| Comparative Example 6 | 18.6 | 18.1 | 17.4 |

Example 11 and Comparative Example 7

A powdery resin mixture was prepared in the same way as in Example 5 except that a solution of 40 parts of the same 2,6-dimethylphenol/2,3,6-trimethylphenol copolymer as used in Example 5 and 40 parts of the same high-impact polystyrene as used in Example 5 in 800 parts of benzene and a solution of 20 parts of the same polystyrene/polybutadiene/polystyrene block copolymer as used in Example 10 in 200 parts of chloroform were used.

The resulting resin mixture was subjected to the same operation as in Example 5, and the resulting product was examined for whiteness. The results are tabulated below.

For comparison, the above procedures was repeated except that the diphosphonite was not added. The results are also shown in the following table (Comparative Example 7).

| Heating time (minutes) | 6 | 30 | 60 |
|---|---|---|---|
| Example 11 | 42.6 | 36.7 | 31.3 |
| Comparative Example 7 | 38.7 | 31.1 | 27.0 |

Example 12 and Comparative Example 8

Example 9 and Comparative Example 5 were each repeated except that poly(2,6-dimethyl-1,4-phenylene)ether having an intrinsic viscosity, measured at 25°C in chloroform, of 0.56 dl/g was used as the polyphenylene ether resin. The results are tabulated below. It is seen that the diphosphonite is effective for inhibiting coloration of polyphenylene ether under heat.

| Heating time (minutes) | 6 | 30 | 60 |
|---|---|---|---|
| Example 12 | 16.4 | 15.3 | 14.9 |
| Comparative Example 8 | 11.6 | 11.1 | 10.5 |

Example 13 and Comparative Example 9

(1) An autoclave was charged with 100 parts of ethylbenzene and 165 parts of poly(2,6-dimethyl-1,4-phenylene)ether having an intrinsic viscosity, measured at 25°C in chloroform, of 0.55 dl/g, and they were heated to 125°C with stirring. Then, 7 parts of di-tert.-butyl peroxide and 65 parts of styrene were added to the solution and reacted at 165°C for 2 hours. The reaction mixture was withdrawn, and dried at 215°C under reduced pressure for 2 hours to remove ethylbenzene and the unreacted styrene to afford styrene-grafted poly(2,6-dimethyl-1,4-phenylene)ether. The grafted copolymer had a polystyrene content of about 25%.

(2) The grafted copolymer was used as the polyphenylene ether resin, and otherwise the same operation as in Example 5 was repeated. The resulting cylindrical specimens were examined for Hunter's whiteness. The results are tabulated below.

| Heating time (minutes) | 6 | 30 | 60 |
|---|---|---|---|
| Example 13 | 21.2 | 17.3 | 16.5 |
| Comparative Example 9 | 18.4 | 15.1 | 13.8 |

Example 14 and Comparative Example 10

Sixty parts of the same 2,6-dimethylphenol/2,3,6-trimethylphenol copolymer as used in Example 5, 37 parts of the same high-impact polystyrene as used in Example 5, 2 parts of the same polystyrene/polybutadiene/polystyrene block copolymer as used in Example 10, 1 part of the same ethylene/propylene copolymer as used in Example 1, 5.8 parts of triphenyl phosphate, 7 parts of titanium dioxide and 1 part of tetrakis(2,4-di-tert.-butylphenyl)-4,4'-biphenylene diphosphonite were fully mixed in a Henschel mixer. The mixture was pelletized by a twin-screw extruder (AS-30, a product of Nakatani Kikai Seisakusho) in which the maximum temperature of the cylinders was set at 290°C. The resulting pellets were injection-molded under an injection pressure of 103 MPa (1050 kg/cm$^2$) using an injection molding machine (SJ-35B, a product of Meiki Seisakusho) in which the maximum temperature of the cylinder was set at 280°C to prepare a test specimen (specimen A). Separately, the molten resin composition was left to stand for 60 minutes in the cylinder of the injection molding machine, and then injection-molded under the same condition as above to prepare a test specimen (specimen B). The Izod impact strengths of the two types of the specimens were measured, and the results are tabulated below.

For comparison, the above procedure was repeated except that the diphosphonite was not used. The results are also shown in the following table (Comparative Example 10).

| | Izod impact strength notched J/cm (kg-cm/cm) | |
|---|---|---|
| | Specimen A | Specimen B |
| Example 14 | 10.3 (19.2) | 5.3 (9.9) (52%) |
| Comparative Example 10 | 9.6 (18.0) | 3.3 (6.1) (34%) |

It is seen from the results shown in the above table that the heat stability of the resin composition containing the diphosphonite shows further improvement.

Example 15 and Comparative Examples 11 and 12

The various ingredients shown in Example 14 were fully mixed in a Henschel mixer except that the amount of the tetrakis(2,4-di-tert.-butylphenyl)-4,4'-biphenylene diphosphonite was changed to 0.4 part, and 0.36 part of 2-(3',5'-di-tert.-butyl-4'-hydroxyanilino)-4,6-dioctylthio-1,3,5-triazine ("Irganox 565") and 0.24 part of N,N'-hexamethylenebis(3,5-di-tert.-butyl-4-hydroxy-hydrocinamide) ("Irganox 1098") were further added ("Irganox" is a Registered Trade Mark). The resulting mixture was pelletized by a twin-screw extruder (AS-30, a product of Nakatani Kikai Seisakusho) in which the maximum temperature of the cylinders was set at 290°C. The pellets were then injection-molded under an injection pressure of 103 MPa (1050 kg/cm$^2$) by an injection molding machine (SJ-35B, a product of Meiki Seisakusho) in which the maximum temperature of the cylinder was set at 280°C to prepare a test specimen 3 mm ($\frac{1}{8}$ inch) thick. The resulting test specimen was aged in hot air at 115°C for 20 days. The Izod impact strength of the specimen was measured before and after the aging, and the results are tabulated below.

For comparison, the above procedure was repeated except that the Irganox 565 and Irganox 1098 were not used and the diphosphonite was used in an amount of 1 part. The results are also shown in the following table (Comparative Example 11).

Furthermore, for comparison, the above procedure was repeated except that the diphosphonite was not used, and 0.6 part of the Irganox 565 and 0.4 of the Irganox 1098 were used. The results are also shown in the following table (Comparative Example 12).

| | Izod impact strength notched J/cm (kg-cm/cm) | |
|---|---|---|
| | Before aging | After aging |
| Example 15 | 10.7 (20.1) | 5.8 (10.8) (54%) |
| Comparative Example 11 | 10.3 (19.2) | 3.3 (6.2) (32%) |
| Comparative Example 12 | 9.9 (18.5) | 4.4 (8.2) (44%) |

It is seen from the above table that the joint use of the diphosphonite and the sterically hindered phenol

synergistically improves the Izod impact strength of the molded product after aging in hot air, thus stabilizing the resin against high temperatures over a long period of time.

Example 16

The procedure of Example 15 was repeated except that tetrakis-(2,4-di-tert.-butylphenyl)-4,4'-biphenylene diphosphonite and Irganox 565 were used as the stabilizer compounds in the amounts shown in the following table. The resulting test specimens were aged in hot air at 115°C for 10 days. The Izod impact strengths of the test specimens were measured before and after the aging. The results are shown in the following table.

| Run No. | Amount of the di-phosphonite (part) | Amount of the sterically hindered phenol (part) | Izod impact strength notched J/cm (kg-cm/cm) | |
|---|---|---|---|---|
| | | | Before aging | After aging |
| 1 | 1.0 | 0 | 10.3(19.2) | 5.2(9.8) (51%) |
| 2 | 0.6 | 0.4 | 11.1(20.7) | 6.6(12.3) (59%) |
| 3 | 0.4 | 0.6 | 11.2(20.9) | 6.9(12.9) (62%) |
| 4 | 0.2 | 0.8 | 11.1(20.7) | 6.5(12.2) (59%) |

Example 17

The procedure of Example 15 was repeated except that tetrakis(2,4-di-tert.-butylphenyl)-4,4'-biphenylene diphosphonite and 2,2'-methylenebis(4-methyl-6-tert.-butylphenol) were used as the stabilizer compounds in the amounts shown in the following table. The resulting test specimens were aged in hot air at 115°C for 10 days. The Izod impact strengths of the specimens were measured before and after the aging, and the results are tabulated below.

| Run No. | Amount of the di-phosphonite (part) | Amount of the sterically hindered phenol (part) | Izod impact strength notched J/cm (kg-cm/cm) | |
|---|---|---|---|---|
| | | | Before aging | After aging |
| 1 | 1.0 | 0 | 10.3(19.2) | 5.2(9.8) (51%) |
| 2 | 0.6 | 0.4 | 11.1(20.7) | 6.2(11.6) (56%) |
| 3 | 0.4 | 0.6 | 10.8(20.3) | 6.5(12.1) (60%) |
| 4 | 0.2 | 0.8 | 10.5(19.6) | 5.8(10.8) (55%) |

Example 18

Example 15 was repeated using 42 parts of poly(2,6-dimethyl-1,4-phenylene)ether having an intrinsic viscosity, measured at 25°C in chloroform, of 0.56 dl/g, 53.5 parts of the same high-impact polystyrene as used in Example 5, 3.5 parts of the same polystyrene/polybutadiene/polystyrene block copolymer as used in Example 10, 1 part of the same ethylene/propylene copolymer as used in Example 14, 7 parts of titanium dioxide, 0.4 part of tetrakis(2,4-di-tert.-butylphenyl)-4,4'-biphenylene diphosphonite and 0.6 part of 2,6-di-tert.-butyl-p-cresol. The resulting test specimens were aged in hot air at 115°C for 10 days. The Izod impact strengths of the test specimens were measured before and after the aging. The results are tabulated below.

| Run No. | Amount of the di-phosphonite (part) | Amount of the sterically hindered phenol (part) | Izod impact strength notched J/cm (kg-cm/cm) | |
|---|---|---|---|---|
| | | | Before aging | After aging |
| 1 | 1.0 | 0 | 9.9(18.5) | 5.8(10.8) (58%) |
| 2 | 0.4 | 0.6 | 9.7(18.1) | 7.3(13.7) (76%) |

### Example 19 and Comparative Example 13

Sixty parts of the same 2,6-dimethylphenol/2,3,6-trimethylphenol copolymer as used in Example 1, 37 parts of the same high-impact polystyrene as used in Example 1, 2 parts of the same polystyrene/polybutadiene/polystyrene block copolymer as used in Example 1, 1 part of the same ethylene/propylene copolymer as used in Example 1, 5.8 parts of triphenyl phosphate, 7 parts of titanium dioxide, 0.4 part of tetrakis(2,4-di-tert.-butylphenyl)-4,4'-biphenylene diphosphonite, 0.4 part of hydrogenated bisphenol A-phosphite polymer and 0.6 part of 2,6-di-tert.-butyl-p-cresol were fully mixed in a Henschel mixer. The mixture was pelletized by a twin-screw extruder (AS-30, a product of Nakatani Kikai Seisakusho) in which the maximum temperature of the cylinders was set at 290°C. The resulting pellets were left to stand for 60 minutes in the molten state in the cylinder of an injection molding machine (SJ-35B, a product of Meiki Seisakusho) in which the maximum temperature of the cylinder was set at 280°C, and then injection-molded under an injection pressure of 103 MPa (1050 kg/cm$^2$) to prepare a test specimen 3 mm ($\frac{1}{8}$ inch thick).

For comparison, the above procedure was repeated except that 0.56 part of the hydrogenated bisphenol A-phosphite polymer and 0.84 part of 2,6-di-tert.-butyl-p-cresol were used instead of 0.4 part of tetrakis(2,4-di-tert.-butylphenyl)-4,4'-biphenylene diphosphonite, 0.4 part of hydrogenated bisphenol A-phosphite polymer and 0.6 part of 2,6-di-tert.-butyl-p-cresol.

In each run, a test specimen was prepared as above except that the pellets were not allowed to stand in the cylinder before injection.

The Izod impact strengths of the specimens were measured, and the results are tabulated below.

| | Izod impact strength notched J/cm (kg-cm/cm) | |
|---|---|---|
| | Without standing | After 60 minute standing |
| Example 19 | 11.2 (20.9) | 4.5 (8.4) (40%) |
| Comparative Example 13 | 10.5 (19.6) | 3.4 (6.4) (33%) |

### Example 20 and Comparative Example 14

Example 19 was repeated except that the amount of the tetrakis-(2,4-di-tert.-butylphenyl)-4,4'-biphenylene diphosphonite was changed to 1.2, the amount of the hydrogenated bisphenol A-phosphite polymer was changed to 0.32 part, and 0.48 part of 2,2'-methylenebis-(4-methyl-6-tert.-butylphenol) was used instead of the 2,6-di-tert.-butyl-p-cresol.

For comparison, the above procedure was repeated except that 0.8 part of hydrogenated bisphenol A-phosphite polymer and 1.2 parts of 2,2'-methylenebis-(4-methyl-6-tert.-butylphenol) were used instead of the aforessaid three stabilizer compounds.

The Izod impact strengths of the specimens obtained with or without standing during the injection molding were measured, and the results are tabulated below.

| | Izod impact strength notched J/cm (kg-cm/cm) | |
|---|---|---|
| | Without standing | After 60 minute standing |
| Example 20 | 10.6 (19.8) | 5.8 (10.9) (55%) |
| Comparative Example 14 | 11.3 (21.2) | 4.0 (7.4) (35%) |

Example 21 and Comparative Example 15

Thirty-nine parts of poly(2,6-dimethyl-1,4-phenylene)ether having an intrinsic viscosity, measured at 25°C in chloroform, of 0.54 dl/g, 59 parts of the same high-impact polystyrene as used in Example 19, 2 parts of the same polystyrene/polybutadiene/polystyrene block copolymer as used in Example 19, 10.5 parts of triphenyl phosphate, 7 parts of titanium dioxide, 0.8 part of tetrakis(2,4-di-tert.-butylphenyl)-4,4'-biphenylene diphosphonite, 0.28 part of hydrogenated bisphenol A·phosphite polymer and 0.42 part of 2-(3',5'-di-tert.-butyl-4'-hydroxyanilino)-4,6-dioctylthio-1,3,5-triazine were fully mixed in a Henschel mixer. The mixture was pelletized by a twin-screw extruder (AS-30, used in Example 19) in which the maximum temperature of the cylinders was set at 280°C. The resulting pellets were left to stand in the molten state for 60 minutes in the cylinder of an injection molding machine (SJ-35B, used in Example 19) in which the maximum temperature of the cylinder was set at 240°C, and then injection-molded under an injection pressure of 103 MPa (1050 kg/cm$^2$) to prepare a test specimen.

For comparison, the above procedure was repeated except that the diphosphonite was not used, and 0.6 part of hydrogenated bisphenol A·phosphite polymer and 0.9 part of 2-(3',5'-di-tert.-butyl-4'-hydroxyanilino)-4,6-dioctylthio-1,3,5-triazine were used as the stabilizer compounds (Comparative Example 15).

The Izod impact strengths of the test specimens obtained with or without standing during the injection molding were measured. The results are tabulated below.

| | Izod impact strength notched J/cm (kg-cm/cm) | |
|---|---|---|
| | Without standing | After 60 minute standing |
| Example 21 | 6.3 (11.8) | 6.1 (11.5) (97%) |
| Comparative Example 15 | 5.6 (10.5) | 4.8 (8.9) (85%) |

Example 22 and Comparative Example 16

Fifty-five parts of the same 2,6-dimethylphenol/2,3,6-trimethylphenol copolymer as used in Example 19, 42 parts of the same high-impact polystyrene as used in Example 19, 2 parts of the same polystyrene/polybutadiene/polystyrene block copolymer as used in Example 19, 1 part of the same ethylene/propylene copolymer as used in Example 19, 15 parts of triphenyl phosphate, 5 parts of titanium dioxide, 0.4 part of tetrakis(2,4-di-tert.-butylphenyl)-4,4'-biphenylene diphosphonite, 0.4 part of tricresyl phosphite and 0.6 part of pentaerythrityltetrakis[3-(3,5-di-tert.-butyl-4-hydroxyphenyl)propionate] were fully mixed in a Henschel mixer. The mixture was pelletized by a twin-screw extruder (AS-30, used in example 19) in which the maximum temperature of the cylinder was set at 290°C. The resulting pellets were left to stand in the molten state for 60 minutes in the cylinder of an injection molding machine (SJ-35B, used in Example 19) in which the maximum temperature of the cylinder was set at 240°C, and then injection-molded under an injection pressure of 103 MPa (1050 kg/cm$^2$) to prepare a test specimen for measurement of Izod impact strength.

For comparison, the above procedure was repeated except that the diphosphonite was not used, and 0.56 part of tricresyl phosphite and 0.84 part of pentaerythrityltetrakis[3-(3,5-di-tert.-butyl-4-hydroxyphenyl)propionate] were used as the stabilizer compounds (Comparative Example 16).

The Izod impact strengths of the test specimens obtained with or without standing during the injection molding were measured, and the results are tabulated below.

| | Izod impact strength notched J/cm (kg-cm/cm) | |
|---|---|---|
| | Without standing | After 60 minute standing |
| Example 22 | 12.4 (23.2) | 11.6 (21.8) (94%) |
| Comparative Example 16 | 12.0 (22.5) | 10.2 (19.1) (85%) |

**Claims**

1. A polyphenylene ether resin composition comprising a matrix of a polyphenylene ether resin and dispersed therein, as heat stabilizer, a phosphorus oxyacid compound, characterised in that there is used as stabilizer a phosphorus oxyacid compound selected from a phosphonous acid of the formula

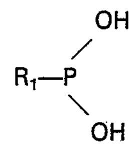

(I)

wherein $R_1$ represents an alkyl group, an aryl group which may be substituted by an alkyl group or an aralkyl group which may be substituted by an alkyl group, and a di-phosphonite of the formula

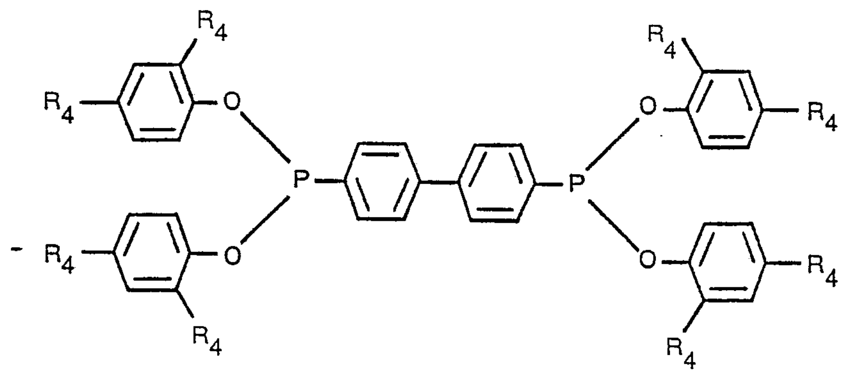

(II)

wherein $R_4$ represents identical or different alkyl groups, in an amount of 0.01 to 10 parts by weight per 100 parts by weight of the matrix.

2. A composition according to claim 1, which further comprises at least one sterically hindered phenol dispersed in the polyphenylene ether resin matrix.

3. A composition according to claim 2 which further comprises at least one organic phosphite compound selected from organic monophosphites and organic polyphosphites dispersed in the matrix.

4. A composition according to claim 1, 2 or 3 wherein the polyphenylene ether resin of the matrix is a polyphenylene ether homopolymer or copolymer obtained by polycondensing at least one mononuclear phenol of the formula

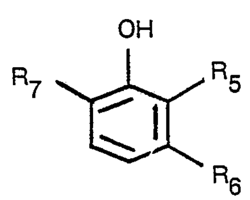

(III)

wherein $R_5$, $R_6$ and $R_7$ independently represent a hydrogen atom or an alkyl group having 1 to 3 carbon atoms, provided that at least one of $R_5$ and $R_7$ is an alkyl group having 1 to 3 carbon atoms, or a grafted polyphenylene ether obtained by graft-copolymerizing said polyphenylene ether with a vinyl aromatic compound.

5. A composition according to claim 4 wherein the vinyl aromatic compound is selected from the group consisting of styrene, alpha-methylstyrene, vinyltoluene and vinylxylene.

6. A composition according to claim 1, 2 or 3 wherein the polyphenylene ether resin of the matrix is poly(2,6-dimethyl-1,4-phenylene)ether, a polyphenylene ether copolymer derived from 2,6-dimethylphenol and 2,3,6-trimethylphenyl, or a grafted polyphenylene ether obtained by grafting styrene to any of said polyphenylene ethers.

7. A composition according to any one of the preceding claims wherein the matrix is a mixture of a polyphenylene ether resin with another polymer.

8. A composition according to claim 7 wherein the other polymer is a thermoplastic resin containing at least 25% by weight of a recurring structural unit of the formula

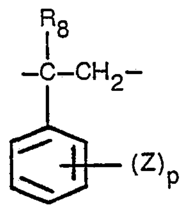

(IV)

wherein $R_8$ represents a hydrogen atom or a methyl or ethyl group, Z represents a halogen atom or a methyl or ethyl alkyl gorup, and p is 0 or a positive integer of 1 to 3, in the polymer chain.

9. A composition according to claim 7 or 8 wherein the other polymer is an elastomer having a Young's modulus at ordinary temperature of $10^5$ to $10^9$ dynes/cm$^2$.

10. A composition according to claim 9 wherein the elastomer is an elastomeric block copolymer of the type A—B—A' wherein A and A' represent a polymer chain block of a vinyl aromatic compound and B represents a polymer chain block of a conjugated diene, or the type A—B'—A wherein A and A' are as defined above, and B' represents a hydrogenated polymer chain block of a conjugated diene.

11. A composition according to claim 10 wherein the vinyl aromatic compound is selected from styrene, alpha-methylstyrene, vinyltoluene, vinylxylene, ethylvinylxylene, vinylnaphthalene and mixtures of two or more of these.

12. A composition according to claim 10 or 11 wherein the conjugated diene is selected from 1,3-butadiene, 2,3-dimethylbutadiene, isoprene, 1,3-pentadiene and mixtures of two or more of these.

13. A composition according to any one of claims 7 to 12 wherein the amount of the polyphenylene ether is at least 5% by weight of the matrix.

14. A composition according to any one of the preceding claims wherein the alkyl groups for $R_1$ in formula (I) and $R_4$ in formula (II) contain 1 to 10 carbon atoms.

15. A composition according to any one of claims 1 to 13 wherein the aryl group for $R_1$ in formula (I) is a phenyl, diphenyl or naphthyl group.

16. A composition according to any one of claims 1 to 13 wherein the aralkyl group for $R_1$ in formula (I) is a benzyl or triphenylmethyl group.

17. A composition according to claim 2 wherein the amount of the sterically hindered phenol is 0.05 to 10 parts by weight per 100 parts by weight of the matrix.

18. A composition according to claim 3 wherein the amount of the organic monophosphite and/or organic polyphosphite is 0.05 to 10 parts by weight per 100 parts by weight of the matrix.

19. Shaped articles of a composition as claimed in any one of the preceding claims.

**Patentansprüche**

1. Polyphenylenetherharz-Masse, umfassend eine Matrix aus einem Polyphenylenetherharz und einer darin als Wärmestabilisator dispergierten Phosphoroxysäure-Verbindung, dadurch gekennzeichnet, daß darin als Stabilisator eine Phosphoroxysäure-Verbindung, ausgewählt aus einer Phosphonigen Säure der Formel

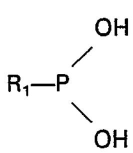

(I)

in der $R_1$ eine Alkylgruppe, eine Arylgruppe, die durch eine Alkylgruppe substituiert sein kann, oder eine Aralkylgruppe, die durch eine Alkylgruppe substituiert sein kann, bedeutet, und einem Diphosphonit der Formel

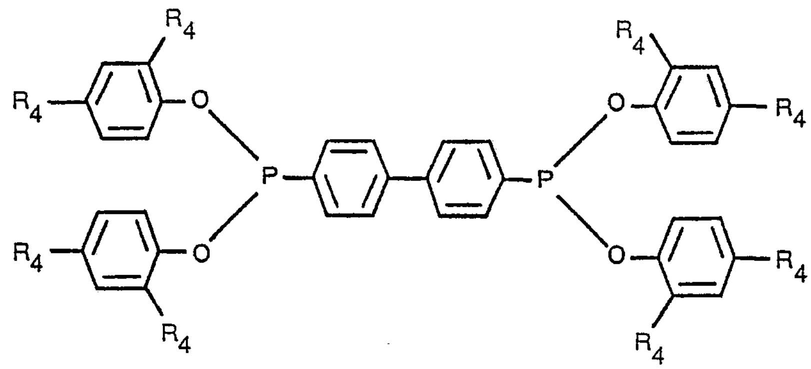

(II)

in der $R_4$ gleich oder unterschiedliche Alkylgruppen bedeutet, in einer Menge von 0,01 bis 10 Gew.-Teilen je 100 Gew.-Teile Matrix verwendet wird.

2. Masse nach Anspruch 1, die zusätzlich mindestens ein in der Polyphenylenetherharz-Matrix dispergiertes sterisch gehindertes Phenol umfaßt.

3. Masse nach Anspruch 2, die zusätzlich mindestens eine in der Matrix dispergierte organische Phosphit-Verbindung, ausgewählt aus organischen Monophosphiten und organischen Polyphosphiten, enthält.

4. Masse nach Anspruch 1, 2 oder 3, bei der das Polyphenylenetherharz der Matrix ein Polyphenylenether-homopolymer oder -copolymer ist, das durch Polykondensieren mindestens eines einkernigen Phenols der Formel

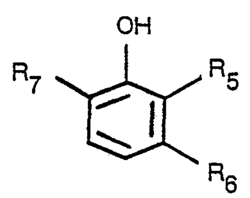

(III)

in der $R_5$, $R_6$ und $R_7$ unabhängig voneinander ein Wasserstoffatom oder eine Alkylgruppe mit 1 bis 3 Kohlenstoffatomen bedeutet, mit der Maßgabe, daß mindestens ein $R_5$ oder $R_7$ eine Alkylgruppe mit 1 bis 3 Kohlenstoffatomen ist, erhalten worden ist, oder ein gepfropfter Polyphenylenether, erhalten durch Pfropfcopolymerisieren des Polyphenylenethers mit einer vinylaromatischen Verbindung.

5. Masse nach Anspruch 4, bei der die vinylaromatische Verbindung aus der Gruppe, bestehend aus Styrol, α-Methylstyrol, Vinyltoluol und Vinylxylol, ausgewählt worden ist.

6. Masse nach Anspruch 1, 2 oder 3, bei der das Polyphenylenetherharz der Matrix Poly(2,6-dimethyl-1,4-phenylen)ether, ein Polyphenylenether-copolymer, abgeleitet von 2,6-Dimethylphenol und 2,3,6-Trimethylphenol, oder ein gepfropfter Polyphenylenether, erhalten durch Aufpfropfen von Styrol auf einen der genannten Polyphenylenether ist.

7. Masse nach einem der vorangehenden Ansprüche, bei der die Matrix ein Gemisch aus einem Polyphenylenetherharz und einem anderen Polymer ist.

8. Masse nach Anspruch 7, bei der das andere Polymer ein thermoplastisches Harz ist, das in der Polymerkette mindestens 25 Gew.-% einer wiederkehrenden Struktureinheit der Formel

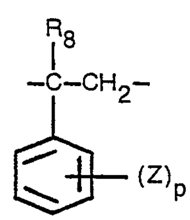

(IV)

enthält, in der $R_8$ ein Wasserstoffatom oder eine Methyl- oder Ethylgruppe bedeutet, Z für ein Halogenatom oder eine Methyl- oder Ethylgruppe steht und p 0 oder eine positive ganze Zahl von 1 bis 3 ist.

9. Masse nach Anspruch 7 oder 8, bei der das andere Polymer ein Elastomer mit einem Young'schen Modul bei gewöhnlicher Temperatur von $10^5$ bis $10^9$dyn/cm$^2$ ist.

10. Masse nach Anspruch 9, bei der das Elastomer ein elastomeres Blockcopolymer der Art A—B—A', wobei A und A' (jeweils) einen Polymerblock aus einer vinylaromatischen Verbindung und B einen Polymerblock aus einem konjugierten Dien bedeuten, oder der Art A—B'—A' ist, wobei A und A' wie oben definiert sind und B' einen hydrierten Polymerblock eines konjugierten Diens bedeutet.

11. Masse nach Anspruch 10, bei der die vinylaromatische Verbindung ausgewählt ist unter Styrol, α-Methylstyrol, Vinyltoluol, Vinylxylol, Ethylvinylxylol, Vinylnaphthalin und Gemischen aus zwei oder mehr dieser (Monomeren).

12. Masse nach Anspruch 10 oder 11, bei der das konjugierte Dien ausgewählt ist aus 1,3-Butadien, 2,3-Dimethylbutadien, Isopren, 1,3-Pentadien und Gemischen aus zwei oder mehr dieser (Monomeren).

13. Masse nach einem der Ansprüche 7 bis 12, bei der die Menge des Polyphenylenethers mindestens 5 Gew.-% der Matrix ausmacht.

14. Masse nach einem der vorangehenden Ansprüche, bei der die Alkylgruppen für $R_1$ in Formel (I) und $R_4$ in Formel (II) 1 bis 10 Kohlenstoffatome enthalten.

15. Masse nach einem der Ansprüche 1 bis 13, bei der die Arylgruppe für $R_1$ in Formel (I) eine Phenyl-, Diphenyl- oder Naphthylgruppe ist.

16. Masse nach einem der Ansprüche 1 bis 13, bei der die Aralkylgruppe für $R_1$ in der Formel (I) eine Benzyl- oder Triphenylmethylgruppe ist.

17. Masse nach Anspruch 2, bei der die Menge des sterisch gehinderten Phenols 0,05 bis 10 Gew.-Teile je 100 Gew.-Teile der Matrix beträgt.

18. Masse nach Anspruch 3, bei der die Menge des organischen Monophosphits und/oder organischen Polyphosphits 0,05 bis 10 Gew.-Teile je 100 Gew.-Teile der Matrix beträgt.

19. Formkörper aus einer Masse nach einem der vorangehenden Ansprüche.

**Revendications**

1. Composition de résine de poly(oxyphénylène) comprenant une matrice de résine de poly(oxyphénylène) contenant en dispersion, comme stabilisant à la chaleur, un composé oxy-acide du phosphore, caractérisée par le fait qu'on utilise comme stabilisant un composé oxyacide du phosphore choisi parmi un acide phosphoneux de formule:

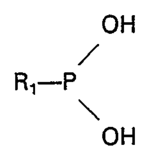

(I)

dans laquelle $R_1$ représente un groupe alkyle, un groupe aryle qui peut être substitué par un groupe alkyle ou bien un groupe aralkyle qui peut être substitué par un groupe alkyle, et un diphosphonite de formule:

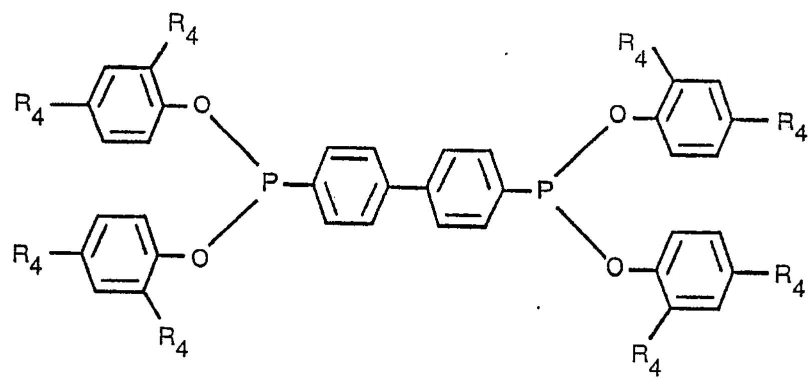

(II)

dans laquelle $R_4$ représente des groupes alkyle identiques ou différents, à raison de 0,01 à 10 parties en poids pour 100 parties en poids de la matrice.

2. Composition selon la revendication 1, qui comprend encore au moins un phénol à empêchement stérique dispersé dans la matrice de résine de poly(oxyphénylène).

3. Composition selon la revendication 2, qui comprend encore au moins un composé phosphite organique choisi parmi les monophosphites organiques et lest polyphosphites organiques dispersés dans la matrice.

4. Composition selon la revendication 1, 2, ou 3 dans laquelle la résine de poly(oxyphénylène) de la matrice est un homopolymère ou un copolymère de poly(oxyphénylène) obtenu par polycondensation d'au moins un phénol mononucléaire de formule:

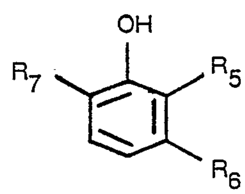

(III)

dans laquelle $R_5$, $R_6$ et $R_7$ indépendamment représentent chacun un atome d'hydrogène ou un groupe alkyle ayant 1 à 3 atomes de carbone pourvu qu'au moins un des symboles $R_5$ et $R_7$ soit un groupe alkyle

ayant 1 à 3 atomes de carbone, ou un poly(oxyphénylène) greffé obtenu par copolymérisation-greffage dudit poly(oxyphénylène) avec un composé vinyle aromatique.

5. Composition selon la revendication 4, dans laquelle le composé vinyl-aromatique est choisi parmi le styrène, l'alpha-méthlstyrène, le vinyltoluène et le vinylxylène.

6. Composition selon la revendication 1, 2 ou 3, dans laquelle la résine de poly(oxyphénylène) de la matrice est le poly(oxy-2,6-diméthyl-1,4-phénylène), un copolymère de poly(oxyphénylène) provenant du 2,6-diméthylphénol et du 2,3,6-triméthylphényle ou un poly(oxyphénylène) greffé obtenu par greffage du sytrène sur l'un quelconque desdits poly(oxyphénylène).

7. Composition selon l'une quelconque des revendications précédentes, dans laquelle la matrice est un mélange d'une résine de poly(oxyphénylène) avec un autre polymère.

8. Composition selon la revendication 7, dans laquelle l'autre polymère est une résine thermoplastique contenant au moins 25% en poids d'un motif de récurrence de formule:

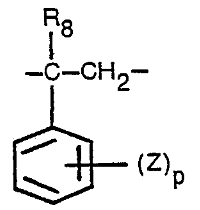

(IV)

dans laquelle $R_8$ représente un atome d'hydrogène ou un groupe méthyle ou éthyle; Z représente un atome d'halogène ou un groupe méthyle ou éthyle, et p est 0 ou un nombre entier positif de 1 à 3, dans la chaîne du polymère.

9. Composition selon la revendication 7 ou 8, dans laquelle l'autre polymère est un élastomère ayant un module de Young à la température ambiante de $10^5$ à $10^9$ dynes/cm$^2$.

10. Composition selon la revendication 9, dans laquelle l'élastomère est un copolymère séquencé élastomère du type A—B—A' dans lequel A et A' représentent une séquence de chaîne polymère d'un composé vinylaromatique et B représente une séquence de chaîne polymère d'un diène conjugué, ou du type A—B'—A dans lequel A et A' sont tels que défini ci-dessus et B' représente une séquence de chaîne polymère hydrogénée d'un diène conjugué.

11. Composition selon la revendication 10, dans laquelle le composé vinyl-aromatique est choisi parmi le styrène, l'alpha-méthylstyrène, le vinyltoluène, le vinylxylène, l'éthylvinylxylène, le vinylnaphthalène et des mélanges d'au moins deux de ces composés.

12. Composition selon la revendication 10, dans laquelle le diène conjugué est choisi parmi le 1,3-butadiène, le 2,3-diméthylbutadiène, l'isoprène, le 1,3-pentadiène et des mélanges d'au moins deux de ces composés.

13. Composition selon l'une quelconque des revendications 7 à 12, dans laquelle la quantité du poly(oxyphénylène) est au moins de 5% en poids de la matrice.

14. Composition selon l'une quelconque des revendications précédentes, dans laquelle les groupes alkyle pour $R_1$ dans la formule (I) et pour $R_4$ dans la formule (II) contiennent 1 à 10 atomes de carbone.

15. Composition selon l'une quelconque des revendications 1 à 13, dans laquelle le groupe aryle pour $R_1$ dans la formule (I) est un groupe phényle, diphényle ou naphtyle.

16. Composition selon l'une quelconque des revendications 1 à 13, dans laquelle le groupe aralkyle pour $R_1$ dans la formule (I) est un groupe benzyle ou triphénylméthyle.

17. Composition selon la revendication 2, dans laquelle la quantité du phénol à empêchement stérique est de 0,05 à 10 parties en poids pour 100 parties en poids de la matrice.

18. Composition selon la revendication 3, dans laquelle la quantité du monophosphite organique et/ou du polyphosphite organique est de 0,05 à 10 parties en poids pour 100 parties en poids de la matrice.

19. Articles façonnés avec une composition telle que revendiquée dans l'une quelconque des revendications précédentes.